# EUROPÄISCHE PATENTANMELDUNG

(11) **EP 2 745 978 A1**
(43) Veröffentlichungstag der Anmeldung: **25.06.2014**
(21) Anmeldenummer: 12197964.5
(22) Anmeldetag: 19.12.2012
(51) Int. Cl.: B23K 26/34

(54) **Breiten- und Höhenverhältnisse beim Laserauftragsschweißen**

(71) Anmelder: Siemens Aktiengesellschaft, 80333 München (DE); Fraunhofer-Gesellschaft zur Förderung der angewandten Forschung e.V., 80686 München (DE)
(72) Erfinder: Gasser, Andres, 52066 Aachen (DE); Linnenbrink, Stefanie, 52372 Kreuzau (DE); Mentzel, Frank, 52066 Aachen (DE); Pirch, Norbert, 52074 Aachen (DE); Arjakine, Nikolai, 10555 Berlin (DE); Burbaum, Bernd, 14612 Falkensee (DE); Melzer-Jokisch, Torsten, 15366 Neuenhagen bei Berlin (DE); Ott, Michael, 45470 Mülheim an der Ruhr (DE); Piegert, Sebastian, 10777 Berlin (DE)

(57) **Zusammenfassung**

Durch ein geometrisches Größenverhältnis der Breite (b) und Höhe (h) der Schweißbahnen beim Auftragsschweißen wird eine Schweißstelle (1) erzielt, die eine minimale Rissanfälligkeit aufweist.

## Beschreibung

Die Erfindung betrifft Größenverhältnisse beim Auftragsschweißen bezüglich der Spurbreite und Spurhöhe der Schweißbahnen.

Beim Auftragsschweißen wird Material aufgeschmolzen und in Schweißbahnen auf die zu schweißende Stelle aufgetragen.
Ggf. sind auch mehrere Schweißbahnen oder Schweißraupen übereinander zu legen.
Für die Qualität einer solchen Schweißung ist es notwendig, dass keine Anbindungsrisse oder Anbindungsfehler eines Substrats erfolgen. Dabei spielen natürlich die Schweißparameter wie Leistung, Massenzufluss und Verfahrgeschwindigkeit eine wichtige Rolle.

Es ist daher Aufgabe der Erfindung, ein Schweißauftragsverfahren aufzuzeigen, das weiterhin verbesserte Ergebnisse zeigt.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigt:
- Figur 1: eine erfindungsgemäße Schweißstelle,

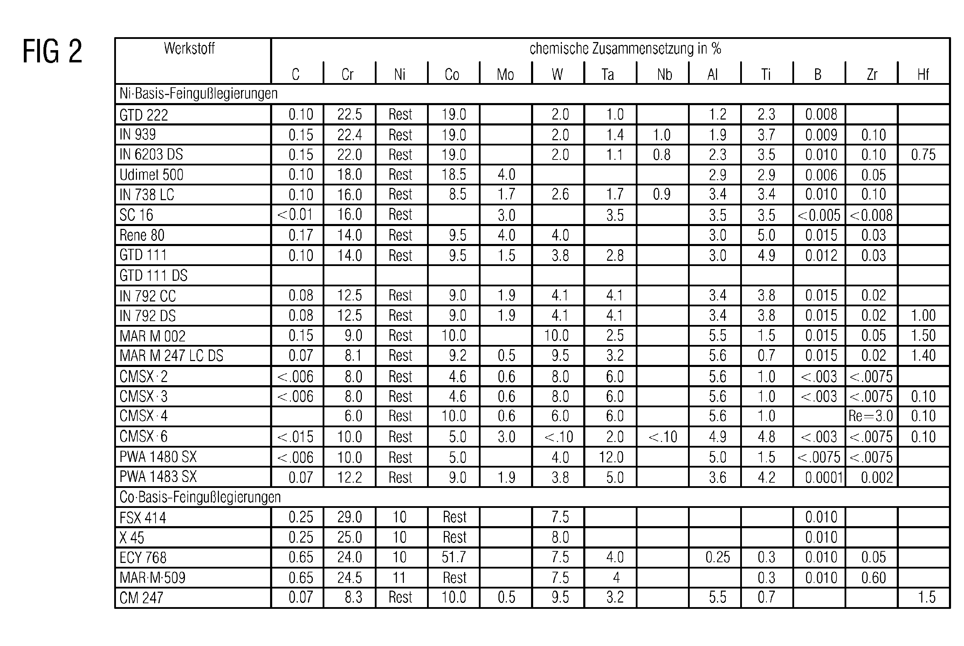

- Figur 2: eine Liste von Superlegierungen.

Die Figur und die Beschreibung stellen nur Ausführungsbeispiele der Erfindung dar.

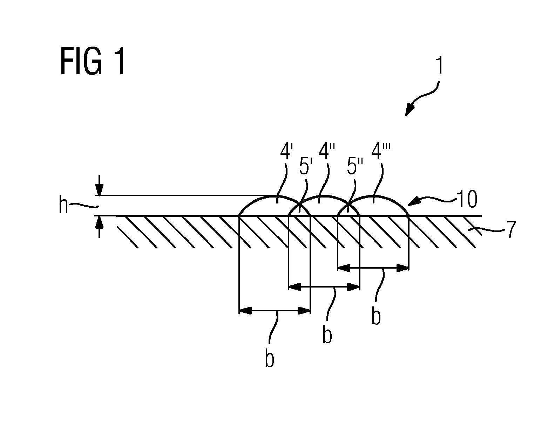

Figur 1 zeigt eine erfindungsgemäße Schweißstelle 1. Auf einem Substrat 7 werden Schweißbahnen 4', 4", 4"', ... aufgetragen.

Vorzugsweise gibt es bei den Schweißbahnen 4', 4", 4"', ... eine Überlappung 5, 5',... .

Die Schweißbahnen 4', 4", 4"', ... ergeben jeweils eine Schweißlage 10.

Die Schweißbahnen 4', 4", 4"' weisen jeweils eine gewisse Breite b auf.

Die Überlappung 5, 5',... beträgt vorzugsweise zwischen 10% und 50% der Breite b.

Um die Rissanfälligkeit einer solchen Schweißstelle 1 weiterhin zu erniedrigen, wird in Abhängigkeit von der Breite b der Schweißbahnen 4', 4", 4"',... die Höhe h der Schweißbahnen 4', 4", 4"'... so ausgewählt, dass sie zwischen 25% und 35%, insbesondere 30% der Breite b beträgt.

Beispiel: Die Schweißbahnen 4', 4", ... weisen eine Breite von 250µm auf, wobei dann die Schweißleistung, Massenzufluss des Schweißmaterials und Verfahrgeschwindigkeit so gewählt werden, dass sich eine Höhe h der Schweißbahnen 4', 4" von etwa 80µm ergibt. Auf diese erste Schweißlage 10 wird eine zweite Schweißlage gelegt.

Bei einer einzelnen Schweißlage 10 liegt die Höhe h der Schweißbahnen 4', 4", 4"' bei 20% bis 30%, insbesondere 25% der Breite b der Schweißbahnen 4', 4", 4"'.

## Patentansprüche

1. Verfahren zum Auftragsschweißen,
insbesondere Laserauftragsschweißen,
bei dem mehrere Schweißbahnen (4', 4", 4"', ...) zur Erzeugung zumindest einer Schweißlage (10) nebeneinander aufgetragen werden,
wobei die Schweißbahnen (4', 4", 4'" ...) jeweils eine Breite (b) aufweisen und
die Schweißparameter so gewählt werden,
dass sich eine Höhe (h) der Schweißbahnen (4', 4", 4"'...) von 25% - 35%,
insbesondere 30%,
der Breite (b) ergibt: h = (0,25 - 0,35)b.

2. Verfahren nach Anspruch 1,
bei dem als Schweißparameter
die Schweißleistung,
der Massenzufluss,
der Überlappungsgrad der Schweißbahnen (14', 14", ...) und/oder die Verfahrgeschwindigkeit
zur Einstellung der Höhe (h) der Schweißbahn (4', 4", 4'", ...) verwendet werden.

3. Verfahren nach einem oder beiden der Ansprüche 1 bis 2, bei dem sich die Schweißbahnen (4', 4", 4"', ...) überlappen.

4. Verfahren nach einem oder mehreren der Ansprüche,
bei dem mehrere Schweißlagen (10, ...) erzeugt werden.

5. Verfahren nach einem oder mehreren der Ansprüche 1 bis 3,
bei dem nur eine Schweißlage erzeugt wird,
die eine Höhe (h) von 20% bis 30%,
insbesondere 25%,
der Breite (b) der einzelnen Schweißbahnen (4', 4", 4"', ...) aufweist.
